Europäisches Patentamt

European Patent Office

Office européen des brevets

(11) Veröffentlichungsnummer: **0 163 003**
**B1**

(12) **EUROPÄISCHE PATENTSCHRIFT**

(45) Veröffentlichungstag der Patentschrift:
12.04.89

(51) Int. Cl.⁴: **C 08 J 3/22**

(21) Anmeldenummer: 85101098.3

(22) Anmeldetag: 02.02.85

(54) Abrasive Feststoffe enthaltendes Feststoffkonzentrat.

(30) Priorität: 11.02.84 DE 3404859

(43) Veröffentlichungstag der Anmeldung:
04.12.85 Patentblatt 85/49

(45) Bekanntmachung des Hinweises auf die Patenterteilung:
12.04.89 Patentblatt 89/15

(84) Benannte Vertragsstaaten:
AT BE CH DE FR GB IT LI NL SE

(56) Entgegenhaltungen:
EP-A- 0 004 268
EP-A- 0 092 776
DE-A- 2 703 810
DE-A- 3 002 753
FR-A- 2 346 390
FR-A- 2 346 419

Die Akte enthält technische Angaben, die nach dem Eingang der Anmeldung eingereicht wurden und die nicht in dieser Patentschrift enthalten sind.

(73) Patentinhaber: HOECHST AKTIENGESELLSCHAFT,
Postfach 80 03 20, D-6230 Frankfurt am Main 80 (DE)

(72) Erfinder: Fritz, Hans-Gerhard, Prof. Dr., Gotenweg 10,
D-7336 Uhingen (DE)
Erfinder: Schüle, Helmut, Reinsburgerstrasse 68A,
D-7000 Stuttgart 1 (DE)
Erfinder: Grünschloss, Eberhard, Schwelzterstrasse 36,
D-7000 Stuttgart 75 (DE)
Erfinder: Riedel, Tomas, Dr., Bibertalstrasse 21,
D-8901 Biberbach (DE)
Erfinder: Maier, Karl, Dresdener Strasse 51,
D-8900 Augsburg (DE)

ACTORUM AG

## Beschreibung

Die Erfindung betrifft ein Feststoffkonzentrat zum Einfärben und Füllen bzw. Verstärken von thermoplastischen Kunststoffen, welches abrasive Feststoffe enthält und dennoch wenig Verschleiss an den Verarbeitungsmaschinen gibt.

Zum Einfärben vorzugsweise thermoplastischer Kunststoffe auf ein- und mehrwelligen Extrudern werden heute üblicherweise als «Masterbatch» bezeichnete, meist granulatförmige Pigmentpräparationen eingesetzt. Derartige Präparationen bestehen im allgemeinen aus anorganischen und/oder organischen Pigmenten, aus dem sogenannten Trägermaterial, das wiederum aus mehreren Substanzen zusammengesetzt sein kann, und gegebenenfalls Dispergierhilfen. Als typische Beispiele für derartige Präparationen seien die heute marktgängigen Masterbatche zum Einfärben von Polyethylen genannt, deren Trägermaterialien aus Mischungen von Polyethylen niedriger Dichte (LDPE, Schmelztemperaturbereich T = 112°–115°C) und/oder wachsartigen Substanzen (z.B. Polyethylenwachse mit Schmelztemperaturbereichen zwischen 70° und ca. 120°C) bestehen, wobei die Mischungsverhältnisse in weiten Grenzen variieren können.

Enthalten derartige Präparationen als Pigmente anorganische Substanzen grosser Härte, beispielsweise Metalloxide, wie $Cr_2O_3$ (grün), $TiO_2$ (weiss) oder $Fe_2O_3$ (braun), so treten bei praxisüblichen Masterbatchzugaben von 0,5 bis 5 Gew.-% zum einzufärbenden polymeren Grundmaterial insbesondere bei Extrudern mit genuteter Einzugszone im Bereich der Feststoffförderung exzessive Verschleisserscheinungen auf. Bei Extrudern mit glattem Zylinderrohr tritt ein derartiger, betragsmässig allerdings etwas geringerer Verschleiss vorzugsweise am Anfang der Umwandlungs- bzw. Kompressionszone in Erscheinung. Vielfach schreitet dabei die Abrasion an Schnecke und Zylinder, die aus hochlegiertem und nitrierbarem Stahl (z.B. 34-CrAlNi7, 31 CrMoV9) bestehen und im nitrierten Zustand eine Oberflächenhärte ⩾900 HV 30 besitzen, so rasch voran, dass ein Austausch dieser Komponenten aufgrund drastisch verschlechterten Förderverhaltens bereits nach 1200–2000 Betriebsstunden (= 3–5 Monaten) erforderlich wird. Die wirtschaftliche Bedeutung derartiger Schadensfälle erkennt man sofort, wenn man zum einen die Sanierungskosten für solche Anlagen (Austausch von Schnecke und Einzugbuchse, Sanierung des Plastifizierzylinders: 25 000 bis 30 000 DM, je nach Extrudergrösse) in eine Wirtschaftlichkeitsrechnung einbezieht und zum anderen weiss, dass die Lebensdauer solcher Extrusionssysteme bei Verarbeitung nicht abrasiver Mischungen mit Sicherheit weit über 20 000 Betriebsstunden liegen kann.

Es ist weiterhin bekannt, HD-Polyethylen als alleiniges Trägermaterial für Pigmentkonzentrate zu verwenden (vgl. JP-OS 161 239 v. 26.5.1982). Derartige Pigmentkonzentrate ergeben jedoch keine optimale Verteilung des Pigments im anzufärbenden Polymeren.

Es ist auch bekannt, in Pigmentkonzentraten ataktisches, d.h. weiches Polypropylen zur Verbesserung der Dispergierung der Pigmente einzusetzen (vgl. FR-PS 2 346 390, DE-OS 2 703 810). Wenn diese Pigmentkonzentrate jedoch abrasive Pigmente enthalten, bewirken sie bei ihrer Verarbeitung starken Verschleiss an den Maschinen.

In einer anderen Druckschrift wird ein Zusatzstoff in Granulatform für Thermoplaste beschrieben, welcher aus $CaCO_3$, Polyethylen oder Polypropylen und einem Polyethylenwachs, dessen Eigenschaften nicht beschrieben werden, besteht (vgl. DE-OS 3 002 753).

Für die Färbung von Fasern ist ein Pigmentkonzentrat beschrieben worden, welches ein kristallines Polypropylen mit einem Molgewicht von mehr als 10 000, vorzugsweise mehr als 20 000 enthalten soll (vgl. FR-PS 2 346 419). Die Beispiele wurden jedoch unter Verwendung eines hochmolekularen Polypropylens durchgeführt.

Ein anderes bekanntes Pigmentkonzentrat ist dadurch gekennzeichnet, dass es ein «Harz» (= Kunststoff) und ein bei Mischtemperatur schmelzendes Wachs enthält (vgl. EP-A-4268). Unter den Wachsen sind allerdings die wachsartigen oberflächenaktiven Stoffe bevorzugt.

Schliesslich ist auch bekannt, ein Gemisch von HD-Polyethylen und einem Polyethylenwachs, welches einen Schmelzpunkt von 90 bis 105°C besitzt, zu verwenden (vgl. DD-PS 153 605).

Es bestand die Aufgabe, ein Trägermaterial zu schaffen, welches die Verschleiss gebende Wirkung von abrasiven Feststoffen vermindern kann bei einer guten Verteilung der Feststoffe.

Es wurde gefunden, dass ein Trägermaterial, welches ein bestimmtes Verformungs- und Plastifizierverhalten im Vergleich zu dem einzufärbenden bzw. zu füllenden Polymeren besitzt und ein ganz bestimmtes Wachs enthält oder aus ihm besteht, die Aufgabe erfüllen kann.

Gegenstand der Erfindung ist daher das in den Ansprüchen beschriebene Feststoffkonzentrat.

Das erfindungsgemässe Feststoffkonzentrat besteht aus mindestens einem abrasiven Feststoff, einem Trägermaterial und gegebenenfalls üblichen, für die Verarbeitung und Anwendung erforderlichen Zusatzstoffen.

Als abrasive Feststoffe werden $Cr_2O_3$, $Fe_2O_3$, $TiO_2$ sowie Kreide, Talkum und Schwerspat verwendet.

Die Menge des abrasiven Feststoffes im Feststoffkonzentrat beträgt 10 bis 80, vorzugsweise 20 bis 70, insbesondere 30 bis 60 Gew.-%.

Das Trägermaterial besteht zu 0 bis 99,5, vorzugsweise 30 bis 98, insbesondere 50 bis 95 Gew.-% aus mindestens einem Polyethylen hoher Dichte. Das Aufschmelzverhalten des Polymeren des Trägermaterials soll dem des mit dem Feststoffkonzentrat zu versehenden, d.h. einzufärbenden oder zu füllenden Polymeren ähnlich sein.

Ausserdem besteht das Trägermaterial aus mindestens einem harten, hochschmelzenden Wachs. Dieses Wachs kann ein kristallines Polyolefinwachs oder ein Amidwachs sein. Das Polyolefinwachs ist überwiegend linear aufgebaut und besitzt ein Molgewicht von 1000 bis 20 000, einen Schmelzpunkt von 120 bis 155°C und eine Schmelzviskosität von 100 bis 40 000 mPa.s bei 140°C bei einem Polyethylenwachs und eine Schmelzviskosität von 1000 bis 40 000 mPa.s bei 170°C bei einem Polypropylenwachs. Beispiele für ein derartiges Wachs sind Polyethylen- und Polypropylenwachse, die durch direkte Synthese nach dem Ziegler-Verfahren hergestellt wurden. Diese Wachse werden besonders bevorzugt verwendet.

Geeignete Amidwachse leiten sich von aliphatischen Carbonsäuren mit 16 bis 22 C-Atomen, vorzugsweise 16 bis 18 C-Atomen und Diaminen mit 2 bis 6 C-Atomen, vorzugsweise 2 C-Atomen ab. Insbesondere wird Ethylendistearylamid (Bisstearoylethylendiamin) verwendet.

Der Anteil des Wachses am Trägermaterial beträgt 0,5 bis 100, vorzugsweise 2 bis 70, insbesondere 5 bis 50 Gew.-%. Die Menge des Trägermaterials im Feststoffkonzentrat beträgt 20 bis 90, vorzugsweise 30 bis 80, insbesondere 30 bis 70 Gew.-%.

Bevorzugt besteht das Trägermaterial aus einem Gemisch aus hochdichtem Polyethylen und mindestens einem harten und hochschmelzenden Polyethylenwachs.

Gegebenenfalls kann das Feststoffkonzentrat 0 bis 50, vorzugsweise 2 bis 20 Gew.-% an üblichen, für die Verarbeitung und Anwendung des Konzentrates üblichen Zusatzstoffen enthalten. Derartige Zusatzstoffe sind beispielsweise Stabilisatoren, Gleitmittel wie niedermolekulare niedrigschmelzende Wachse, Metallseifen, Antioxidantien, Flammschutzmittel, optische Aufheller, Antistatika und dergleichen.

Die Herstellung des erfindungsgemässen Feststoffkonzentrats erfolgt im allgemeinen auf die übliche, bekannte Weise, indem die Bestandteile je nach Art und Menge gleichzeitig oder nacheinander in das Mischaggregat eingeführt werden. Als Mischaggregate sind Kneter oder Extruder geeignet.

Die erfindungsgemässen Feststoffkonzentrate geben wesentlich geringeren Verschleiss an den verschleissgefährdeten Teilen der Verarbeitungsmaschinen, wenn sie den zu füllenden bzw. einzufärbenden Polymeren zugefügt werden. Ausserdem zeigen sie eine gute Verteilung der Feststoffe.

Zum direkten Messen des Verschleisses wurde das Dünnschichtdifferenzenverfahren (DDV), eine Verschleissmessmethode der Radionuklidtechnik, angewendet. Bei diesem Verfahren wurde je nach Untersuchungsziel eine im Hauptverschleissbereich liegende Referenzfläche des Schneckengrundes eines Extruders mit Nutbuchse durch Deutronen- und Neutronenbeschuss bis in eine Tiefe von 30 bis 80 µm aktiviert. Erforderlichenfalls sind in gleicher Weise die Nutbuchseninnenoberfläche oder die Schneckenstege zu aktivieren. Die von dem nach einer Abklingzeit von etwa 3 Wochen vom nahezu rein vorliegenden Messisotop Co 56 (= γ-Strahler) abgegebene Impulsrate nimmt mit der Aktivierungstiefe linear ab. Als Messwerte wurden mittels eines NaJ-Szintillationszählers die Impulsraten, d.h. die radioaktive Abstrahlung pro Zeiteinheit, sowie die zugehörige Versuchszeit erfasst und ausgegeben. Unter Berücksichtigung der Halbwertszeit des Messisotops konnte jeder Einzelmesspunkt auf den Zeitpunkt des Versuchsbeginns umgerechnet und unter Einbeziehung der Kalibrierwerte als Funktion der Versuchszeit bestimmt werden. Durch lineare Regression ergab sich aus den kontinuierlich gemessenen Wertepaaren Höhenabnahme/Versuchszeit die Verschleissrate $V_t$ (µm/h) bzw. $V_m = 100 \cdot V_t/m$ (µm/100 kg).

Da das Dünnschichtdifferenzenverfahren sehr aufwendig ist, wurde ein weiteres indirektes Messverfahren entwickelt. Es beruht auf der Beobachtung, dass erfindungsgemässe Feststoffkonzentratpartikel bei der Einarbeitung in Polymere dem Zerquetschen durch die sich drehende Extruderschnecke und dem Zerquetschen zwischen Granulatkörnern als Folge des Kompaktierungs- und Druckaufbauvorgangs einen grösseren Widerstand entgegensetzen als herkömmliche Feststoffkonzentrate.

Zur Messung wurde ein übliches Fliesshärtemessgerät verwendet, bei welchem ein Stempel mit einem Querschnitt von 0,5 cm² eingesetzt war. Die Testmischungen wurden bei 180°C zu Platten (4 × 4 cm) von 1,8 mm Dicke gepresst. Aus den Platten wurden Prüflinge mit einem Durchmesser von 7 mm gestanzt, die bei Raumtemperatur oder erhöhter Temperatur geprüft wurden, wobei der Druck bei Position des Stempels auf halber Prüflingshöhe (= 0,9 mm) gemessen wurde («Quetschhärte»).

Es wurde festgestellt, dass Trägermaterialien, die den geringsten Verschleiss geben, die grösste Quetschhärte besitzen und umgekehrt. Diese Methode hat den Vorteil, dass sie bereits bei den reinen Trägermaterialien, d.h. in Abwesenheit der mineralischen Feststoffe, vergleichbare Werte ergibt.

Vergleichsbeispiel a

Handelsübliches Niederdruckpolyethylen (Dichte 0,958–0,961 g/cm³, MFI 190/5 = 1,5 g/10 min) wurde mit je 1,0 Gew.-% granulatförmiger Mischung A oder B gemischt und mittels eines Einschneckenextruders (70 mm O/L = 20 D) mit genuteter Einzugszone bei einem Temperaturprogramm von der Wärmetrennung bis zur Düse von $Tz_1 = 200°C$, $Tz_2 - Tz_d = 230°C$ extrudiert. Während einer Versuchsdauer von ca. 3 Stunden wurde für die Kunststoffmischungen eine kontinuierliche Messung des lokal vorliegenden Verschleisses durchgeführt und somit ein für jede Kunststoffmischung typisches axiales Verschleissprofil in der Feststoffzone ermittelt. Bei den so gewonnenen Verschleisswerten handelt es sich um einen metallischen Materialabtrag von der Schneckenoberfläche in µm/h oder µm/100 kg Durchsatz. Die Ergebnisse sind in der nachstehenden Tabelle 1 zusammengefasst.

Tabelle 1

|  | Mischung A handelsüblich | Mischung B |
|---|---|---|
| Pigment:<br>Trägermaterial: | 50 Gew.-% Chromoxid ($Cr_2O_3$)<br>20 Gew.-% Wachs (Schmelztemp. 72°C) | 50 Gew.-% Chromoxid ($Cr_2O_3$)<br>50 Gew.-% HDPE<br>Dichte 0,962 g/cm³<br>MFI 190/2,16,8 g/10 min |
|  | 30 Gew.-% LDPE (Dichte 0,923–0,925 g/cm³)<br>MFI 190/2,16 = 1,3–1,8 g/10 min |  |
| gemessener<br>Verschleiss: | $V_t$ = 1,24 µm/h<br>$V_m$ = 2,5 µm/100 kg | $V_t$ = 0,03 µm/h<br>$V_m$ = 0,06 µm/100 kg |

Verschleissreduktion: Faktor 40

Allerdings ist mit der Mischung B noch keine optimale Zerteilung des Pigments im Aufbereitungsprozess und Verteilung des Pigments im Verarbeitungsprozess zu erreichen.

Vergleichsbeispiel b

Der Abriebtest des Vergleichsbeispiels a wurde mit den in der nachstehenden Tabelle aufgeführten Mischungen I bis III wiederholt. Gleichzeitig wurden aus den Mischungen bei 180°C 4 × 4 cm grosse Pressplatten (1,8 mm dick) hergestellt. Aus den Platten wurden Prüflinge (⌀ 7 mm) gestanzt und bei Raumtemperatur in einem Fliesshärteprüfgerät mit einem Stempel mit einem Querschnitt von 0,5 cm² geprüft («Quetschhärte»).

Tabelle 2

|  | III<br>Gew.-% | II<br>Gew.-% | I<br>Gew.-% |
|---|---|---|---|
| Chromoxid | 50 | 50 | 50 |
| HDPE (Dichte 0,962 g/cm³, MFI 190/2,16,8 g/10 min | 50 |  |  |
| LDPE (Dichte 0,923–0,925 g/cm³, MFI 190/2,16,33–39 g/10 min) | – | – | – |
| LDPE (Dichte 0,917–0,920 g/cm³, | – | 50 |  |
| MFI 190/2,16,1,3–1,8 g/10 min) |  |  | 30 |
| Polyethylenwachs (MG ca. 2000, $T_p$ 103 bis 108°C) | – | – | 20 |
| Schneckenabrieb (µm/h) | 0,07 | 0,8 | 1,24 |
| Quetschhärte (bar) bei 20°C | 430 | 210 | 170 |

Beispiel 1 und Vergleichsbeispiele c bis e

Der Quetschhärtetest des Vergleichsbeispieles b wurde an pigmentfreien Mischungen wiederholt, jedoch wurden die Prüflinge zuvor bei 85°C 10 Minuten temperiert. Verwendet wurden folgende Materialien:

A. LDPE (Dichte 0,915–0,918, MFI 190/2,16 17 bis 25 g/10 min)

B. HDPE (Dichte 0,96 g/cm³, MFI 190/5 1,5 g/10 min)

D. Polyethylenwachs, überwiegend linear (MG ca. 3000, Tp 122 bis 127°C)

E. Polyethylenwachs, überwiegend linear (MG ca. 9000, Tp ca. 140°C)

F. Polyethylenwachs (MG ca. 2000, Tp 103 bis 108°C)

G. Tafelparaffin (Tp 58/60°C).

Daneben wurden aus einigen Trägermaterialien und $Cr_2O_3$ Pigmentkonzentrate (50/50) hergestellt und diese in einer Menge von 1 Gew.-% einem HD-Polyethylen (= Material B) beigemischt. Beim Extrudieren wurde mittels DDV die Verschleissrate ermittelt.

Die Zusammensetzung der Mischungen und die Versuchsergebnisse sind in Tabelle 3 zusammengefasst.

Tabelle 3

| Trägermaterial (Gew.-%) | Quetschhärte (bar) | 50% Trägermaterial/ 50% $Cr_2O_3$ | |
| --- | --- | --- | --- |
| | | Verschleissrate ($\mu m/100\,kg$) | Pigmentverteilung im Polymeren |
| Vergleichsbeispiel c | | | |
| 100 A | 80 | | |
| 80 A + 20 F | 60 | | |
| 60 A + 40 F | 55 | | |
| 60 A + 30 F + 10 G | 25 | | |
| 80 A + 20 D | 120 | | |
| 60 A + 40 D | 145 | 1,18 | |
| Vergleichsbeispiel d | | | |
| 100 B | 310 | | |
| Beispiel 1 | | | |
| 80 B + 20 D | 295 | | |
| 60 B + 40 D | 250 | 0,05 | gut |
| 80 B + 20 E | 290 | | |
| 60 B + 40 E | 295 | | |
| Vergleichsbeispiel e | | | |
| Mischung I | 80 | 2,48 | gut |
| Mischung II | 120 | 1,60 | |
| Mischung III | 300 | 0,034 | schlecht |

**Patentansprüche: für die Vertragsstaaten BE CH DE FR GB IT LI NL SE**

1. Feststoffkonzentrat, bestehend aus 10 bis 80 Gew.-% mindestens eines abrasiven Feststoffes aus der Gruppe $Cr_2O_3$, $Fe_2O_3$, $TiO_2$, Kreide, Talkum und Schwerspat, 20 bis 90 Gew.-% eines Trägermaterials und 0 bis 50 Gew.-% eines für die Verarbeitung und Anwendung erforderlichen Zusatzstoffes, dadurch gekennzeichnet, dass das Trägermaterial aus 0 bis 99,5 Gew.-% mindestens eines hochdichten Polyethylens und 0,5 bis 100 Gew.-% mindestens eines kristallinen, überwiegend linear aufgebauten Polyolefinwachses mit einem Molgewicht von 1000 bis 20 000, einem Schmelzpunkt von 120 bis 155°C und einer Schmelzviskosität von 100 bis 40 000 mPa·s bei 140°C bei einem Polyethylenwachs und einer Schmelzviskosität von 1000 bis 40 000 mPa·s bei 170°C bei einem Polypropylenwachs oder eines Amidwachses, welches sich von aliphatischen Carbonsäuren mit 16 bis 22 C-Atomen und Diaminen mit 2 bis 6 C-Atomen abgeleitet, besteht.

2. Feststoffkonzentrat nach Anspruch 1, dadurch gekennzeichnet, dass das Trägermaterial aus 0 bis 99,5 Gew.-% mindestens eines hochdichten Polyethylens und 0,5 bis 100 Gew.-% mindestens eines kristallinen, überwiegend linear aufgebauten Polyethylenwachses mit einem Molgewicht von 1000 bis 20 000, einem Schmelzpunkt von 120 bis 140°C und einer Schmelzviskosität von 100 bis 40 000 mPa·s bei 140°C besteht.

3. Verwendung des Feststoffkonzentrats gemäss Anspruch 1 zum Einfärben oder Füllen von Polymeren.

**Patentansprüche für den Vertragsstaat AT**

1. Verfahren zum Verringern des Verschleisses an Maschinen bei der Verarbeitung von Feststoffkonzentraten, welche aus 10 bis 80 Gew.-% mindestens eines abrasiven Feststoffes aus der Gruppe $Cr_2O_3$, $Fe_2O_3$, $TiO_2$, Kreide, Talkum und Schwerspat, 20 bis 90 Gew.-% eines Trägermaterials und 0 bis 50 Gew.-% eines für die Verarbeitung und Anwendung erforderlichen Zusatzstoffes bestehen, dadurch gekennzeichnet, dass man ein Feststoffkonzentrat verarbeitet, dessen Trägermaterial aus 0 bis 99,5 Gew.-% mindestens eines hochdichten Polyethylens und 0,5 bis 100 Gew.-% mindestens eines kristallinen, überwiegend linear aufgebauten Polyolefinwachses mit einem Molgewicht von 1000 bis 20 000, einem Schmelzpunkt von 120 bis 155°C und einer Schmelzviskosität von 1000 bis 40 000 mPa·s bei 140°C bei einem Polyethylenwachs und einer Schmelzviskosität von 100 bis 40 000 mPa·s bei 170°C bei einem Polypropylenwachs oder eines Amidwachses, welches sich von aliphatischen Carbonsäuren mit 16 bis 22 C-Atomen und Diaminen mit 2 bis 6 C-Atomen ableitet, besteht.

2. Verfahren nach Anspruch 1, dadurch gekennzeichnet, dass man ein Feststoffkonzentrat verarbeitet, dessen Trägermaterial aus 0 bis 99,5 Gew.-% mindestens eines hochdichten Polyethylens und 0,5 bis 100 Gew.-% mindestens eines kristallinen, überwiegend linear aufgebauten Polyethylenwachses mit einem Molgewicht von 1000 bis 20 000, einem Schmelzpunkt von 120 bis 140°C und einer Schmelzviskosität von 100 bis 40 000 mPa·s bei 140°C besteht.

3. Verwendung des Feststoffkonzentrats, bestehend aus 10 bis 80 Gew.-% mindestens eines abrasiven Feststoffes aus der Gruppe $Cr_2O_3$, $Fe_2O_3$, $TiO_2$, Kreide, Talkum und Schwerspat, 20 bis 90 Gew.-% eines Trägermaterials und 0 bis 50 Gew.-% eines für die Verarbeitung und Anwendung erforderlichen Zusatzstoffes, wobei das Trägermaterial aus 0 bis 99,5 Gew.-% mindestens eines hochdichten Polyethylens und 0,5 bis 100 Gew.-% mindestens eines kristallinen, überwiegend linear aufgebauten Polyolefinwachses mit einem Molgewicht von 1000 bis 20 000, einem Schmelzpunkt von 120 bis 155°C und einer Schmelzviskosität von 100 bis 40 000 mPa·s bei 140°C bei einem Polyethylenwachs und einer Schmelzviskosität von 1000 bis 40 000 mPa·s bei 170°C bei einem Polypropylenwachs oder eines Amidwachses, welches sich von aliphatischen Carbonsäuren mit 16 bis 22 C-Atomen und Diaminen mit 2 bis 6 C-Atomen ableitet, besteht, zum Einfärben oder Füllen von Polymeren.

**Claims for the contracting states: BE CH DE FR GB JT LI NL SE**

1. A solids concentrate consisting of 10 to 80% by weigth of at least one abrasive solid from the group comprising $Cr_2O_3$, $Fe_2O_3$, $TiO_2$, chalk, talc and barite, 20 to 90% by weight of a carrier material and 0 to 50% by weight of an additive required for processing and use, wherein the carrier material consists of 0 to 99.5% by weight of at least one high-density polyethylene and 0.5 to 100% by weight of at least one crystalline polyolefin wax which is of predominantly linear structure and has a molecular weight of 1,000 to 20,000, a melting point of 120 to 155°C and a melt viscosity of 1,000 to 40,000 mPa·s at 140°C in the case of a polyethylene wax and a melt viscosity of 1000 to 40,000 mPa·s at 170°C in the case of a polypropylene wax or an amide wax which is derived from aliphatic carboxylic acids having 16 to 22 carbon atoms and diamines having 2 to 6 carbon atoms.

2. A solids concentrate as claimed in claim 1, wherein the carrier material consists of 0 to 99.5% by weight of at least one high-density polyethylene and 0.5 to 100% by weight of at least one crystalline polyethylene wax which is predominantly linear in structure and has a molecular weight of 1,000 to 20,000, a melting point of 120 to 140°C and a melt viscosity of 100 to 40,000 mPa·s at 140°C.

3. The use of the solids concentrate as claimed in claim 1 for coloring or filling polymers.

**Claims: for the contracting state AT**

1. A process for reducing the wear on machines during processing of solids concentrates which consist of 10 to 80% by weight of at least one abrasive solid from the group comprising $Cr_2O_3$, $Fe_2O_3$, $TiO_2$, chalk, talc and barite, 20 to 90% by weight of a carrier material and 0 to 50% by weight of an additive required for the processing and use, which comprises processing a solids concentrate, the carrier material of which consists of 0 to 99.5% by weight of at least one high-density polyethylene and 0.5 to 100% by weight of at least one crystalline polyolefin wax which is predominantly linear in structure and has a molecular weight of 1,000 to 20,000, a melting point of 120 to 155°C and a melt viscosity of 100 to 40,000 mPa·s at 140°C in the case of a polyethylene wax and a melt viscosity of 1,000 to 40,000 mPa·s at 170°C in the case of a polypropylene wax or an amide wax which is derived from aliphatic carboxylic acids having 16 to 22 carbon atoms and diamines having 2 to 6 carbon atoms.

2. The process as claimed in claim 1, wherein a solids concentrate, the carrier material of which consists of 0 to 99.5% by weight of at least one high-density polyethylene and 0.5 to 100% by weight of at least one crystalline polyethylene wax which is predominantly linear in structure and has a molecular weight of 1,000 to 20,000, a melting point of 120 to 140°C and a melt viscosity of 100 to 40,000 mPa·s at 140°C is processed.

3. The use of the solids concentrate consisting of 10 to 80% by weight of at least one abrasive solid from the group comprising $Cr_2O_3$, $Fe_2O_3$, $TiO_2$, chalk, talc and barite, 20 to 90% by weight of a carrier material and 0 to 50% by weight of an additive required for the processing and use, the carrier material consisting of 0 to 99.5% by weight of at least one high-density polyethylene and 0.5 to 100% by weight of at least one crystalline polyolefin wax which is predominantly linear in structure and has a molecular weight of 1,000 to 20,000, a melting point of 120 to 155°C and a melt viscosity of 100 to 40,000 mPa·s at 140°C in the case of a polyethylene wax and a melt viscosity of 1,000 to 40,000 mPa·s at 170°C in the case of a polypropylene wax or an amide wax which is derived from aliphatic carboxylic acids having 16 to 22 carbon atoms and diamines having 2 to 6 carbon atoms, for coloring or filling polymers.

**Revendications pour les Etats contractants: BE CH DE FR GB JT LI NL SE**

1. Concentré de matières solides constitué de 10 à 80% en poids d'au moins une matière solide abrasive prise dans l'ensemble constitué par $Cr_2O_3$, $Fe_2O_3$, $TiO_2$, la craie, le talc et la barytite, de 20 à 90% en poids d'une matière support et de 0 à 50% en poids d'un additif nécessaire pour la mise en œuvre et l'application, concentré caractérisé en ce que la matière support est constituée: de 0 à 99,5% en poids d'au moins un polyéthylène haute densité et de 0,5 à 100% en poids d'au moins une cire de polyoléfine cristallisée à structure essentiellement linéaire ayant une masse moléculaire de 1000 à 20 000, un point de fusion de 120 à 155°C et une viscosité à l'état fondu qui, pour une cire de polyéthylène, est de 100 à 40 000 mPa·s à 140°C, et, pour une cire de polypropylène, de 1000 à 40 000 mPa·s à 170°C, ou d'une cire amidique dérivant d'acides carboxyliques aliphatiques contenant de 16 à 22 atomes de carbone et de diamines contenant de 2 à 6 atomes de carbone.

2. Concentré de matières solides selon la revendication 1 caractérisé en ce que la matière support est constituée: de 0 à 99,5% en poids d'au moins un polyéthylène haute densité et de 0,5 à 100% en poids d'au moins une cire de polyéthylène cristallisée à structure essentiellement linéaire ayant une masse moléculaire de 1000 à 20 000, un point de fusion de 120 à 140°C et une viscosité à l'état fondu de 100 à 40 000 mPa·s à 140°C.

3. Application du concentré de matières solides selon la revendication 1 pour colorer dans la masse ou pour charger des polymères.

### Revendications pour l'Etat contractant: AT

1. Procédé pour diminuer l'usure sur des machines lors de la mise en œuvre de concentrés de matières solides qui sont constitués de 10 à 80% en poids d'au moins une matière solide abrasive prise dans l'ensemble constitué par $Cr_2O_3$, $Fe_2O_3$, $TiO_2$, la craie, le talc et la barytite, de 20 à 90% en poids d'une matière support et de 0 à 50% en poids d'un additif nécessaire pour la mise en œuvre et l'application, procédé caractérisé en ce qu'on met en œuvre un concentré de matières solides dont la matière support est constituée: de 0 à 99,5% en poids d'au moins un polyéthylène haute densité et de 0,5 à 100% en poids d'au moins une cire de polyoléfine cristallisée à structure essentiellement linéaire ayant une masse moléculaire de 1000 à 20 000, un point de fusion de 120 à 155°C et une viscosité à l'état fondu qui pour une cire de polyéthylène, est de 100 à 40 000 mPa·s à 140°C, et, pour une cire de polyproylène, de 1000

à 40 000 mPa·s à 170°C, ou d'une cire amidique dérivant d'acides carboxyliques aliphatiques contenant de 16 à 22 atomes de carbone et de diamines contenant de 2 à 6 atomes de carbone.

2. Procédé selon la revendication 1 caractérisé en ce qu'on met en œuvre un concentré de matières solides dont la matière support est constituée: de 0 à 99,5% en poids d'au moins un polyéthylène haute densité et de 0,5 à 100% en poids d'au moins une cire de polyéthylène cristallisée à structure essentiellement linéaire ayant une masse moléculaire de 1000 à 20 000, un point de fusion de 120 à 140°C et une viscosité à l'état fondu qui, pour une cire de polyéthylène, est de 100 à 40 000 mPa·s à 140°C.

3. Application du concentré de matières solides qui est constitué de 10 à 80% en poids d'au moins une matière solide abrasive prise dans l'ensemble constitué par $Cr_2O_3$, $Fe_2O_3$, $TiO_2$, la craie, le talc et la barytite, de 20 à 90% en poids d'une matière support et de 0 à 50% en poids d'un additif nécessaire pour la mise en œuvre et l'application, concentré dont la matière support est constituée de 0 à 99,5% en poids d'au moins un polyéthylène haute densité et de 0,5 à 100% en poids d'au moins une cire de polyoléfine cristallisée à structure essentiellement linéaire ayant une masse moléculaire de 1000 à 20 000, un point de fusion de 120 à 155°C et une viscosité à l'état fondu qui, pour une cire de polyéthylène, est de 100 à 40 000 mPa·s à 140°C, et, pour une cire de polypropylène, de 1000 à 40 000 mPa·s à 170°C, ou d'une cire amidique dérivant d'acides carboxyliques aliphatiques contenant de 16 à 22 atomes de carbone et de diamines contenant de 2 à 6 atomes de carbone, pour colorer dans la masse ou charger des polymères.